(19) Europäisches Patentamt
European Patent Office
Office européen des brevets

(11) **EP 2 752 924 A1**

(12) **EUROPEAN PATENT APPLICATION**
published in accordance with Art. 153(4) EPC

(43) Date of publication:
**09.07.2014 Bulletin 2014/28**

(51) Int Cl.:
*H01M 4/58* $^{(2010.01)}$     *H01M 4/06* $^{(2006.01)}$
*H01M 6/16* $^{(2006.01)}$

(21) Application number: **11871789.1**

(22) Date of filing: **08.09.2011**

(86) International application number:
**PCT/CN2011/079487**

(87) International publication number:
**WO 2013/029282 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2011 CN 201110258117**

(71) Applicant: **Huizhou Huiderui Lithium Battery Technology Co., Ltd**
**Huizhou, Guangdong 516006 (CN)**

(72) Inventors:
• **HE, Xianwen**
**Huizhou**
**Guangdong 516003 (CN)**

• **LAO, Zhongfen**
**Huizhou**
**Guangdong 516003 (CN)**
• **PAN, Wenshuo**
**Huizhou**
**Guangdong 516003 (CN)**

(74) Representative: **Beetz & Partner**
**Patentanwälte**
**Steinsdorfstraße 10**
**80538 München (DE)**

(54) **NONAQUEOUS ELECTRICAL CHEMICAL BATTERY AND METHOD FOR PREPARING SAME**

(57) A non-aqueous electro-chemical battery and a method of preparation thereof, wherein the electro-chemical battery comprises an anode current collector, a cathode, electrolyte solution and a separator, wherein the anode current collector contains anode coating and the anode current collector as a whole acts as an anode; both the anode current collector and the cathode are provided with tabs; the cathode is made of lithium metal or lithium-aluminum alloy; ratio of capacity of the anode per unit area to capacity of the cathode per unit area is less than 1.0; ratio of theoretical total capacity of the anode to the theoretical total capacity of the cathode is greater than 1.0. According to the method of preparing the battery, when the anode, the cathode and the separator are placed one over another, a front end of the anode and a front end of the cathode is placed in staggered positions. The present invention could reduce shortcut rate during battery manufacturing process and it ensures strong current power output and at the same time improves battery safety.

**Description**

BACKGROUND OF THE INVENTION

The present invention relates to the field of chemical battery and more specifically relates to a non-aqueous electro-chemical battery and a method of preparation thereof.

Nowadays, rapid diversification and miniaturization of electrical components have led to development of batteries which are required to have strong specific power, high specific energy, long duration of use, reasonable prices and which are convenient to use. Rapid development of small-sized electrical appliances has multiplied the demand of small-sized batteries for household use in the market, and these small-sized batteries are expected by the market to have a wide range of varieties, long battery life, high capacity and small size. Lithium-ferrous disulfide batteries have been satisfactorily adapted to the current trend of battery development. A lithium-ferrous disulfide battery should strike a balance between safety and strong current power output. If cathode active materials are more than anode active materials in a lithium-ferrous disulfide battery, more cathode active materials will remain in the battery after reaction. Since lithium is a high energy material, risk of unsafety exists. Also, since an anode tab of a lithium battery generally uses a relatively sharp steel tape or a nickel tape, accidents due to shortcut inside the battery may occur in extreme condition where the steel tape or the nickel tape may easily pierce through and damage a battery separator, and certain protective measures should therefore be implemented. During strong current power output, the battery could only react at contacting surfaces, and lithium tapes insufficient in their quantity may break at a later stage during the strong current power output, as a result, the battery cannot demonstrate its theoretical capacity. Chinese patent publication number CN1659729 relates to a kind of non-aqueous battery comprising a lithium metallic foil anode and a cathode coating which comprises ferrous disulfide as an active material wherein the coating is applied to at least one surface of a metallic substrate that functions as a cathode current collector. However, the said Chinese patent is still susceptible to the problems of high shortcut rate and risk of unsafety.

BRIEF SUMMARY OF THE INVENTION

In view of the aforesaid disadvantages now present in the prior art, the present invention is provided to reduce shortcut during battery manufacturing process. The present invention maintains a strong current power output of the battery and at the same time improves battery safety. In other words, the present invention can strike a balance between battery safety and strong current power output of the battery.

The present invention is attained as follows: A non-aqueous electro-chemical battery comprising an anode current collector, a cathode, electrolyte solution and a separator, wherein the anode current collector contains anode coating and the anode current collector as a whole acts as an anode. Both the anode current collector and the cathode are provided with tabs. The cathode is made of lithium metal or lithium-aluminum alloy. The anode coating comprises the following components in the following weight ratio: pyrite: conductive carbon black: graphite: additive: adhesive in weight ratio of (80-90): (0.5-4): (1-4): (0-4): (1-4). Ratio of capacity of the anode per unit area to capacity of the cathode per unit area is less than 1.0. Ratio of theoretical total capacity of the anode to theoretical total capacity of the cathode is greater than 1.0.

Further, according to the non-aqueous electro-chemical battery of the present invention, the additive is any one of $MnO_2$, $TiO_2$, $LiCoO_2$, $LiMnO_2$, $LiNiO_2$, $Li_2TiO_3$, $Li_4Ti_5O_{12}$ or mixture of several of them. The adhesive is any one of polyvinyl alcohol (PVA), polyvinylidene difluoride (PVDF), polytetrafluoroethylene (PTFE), carboxymethylcellulose sodium (CMC), styrene-butadiene rubber latex (SBR), N-methylpyrrolidone (NMP) or mixture of any two of them. Mixture of the carboxymethylcellulose sodium (CMC) and the styrene-butadiene rubber latex (SBR) is 1-4% of the weight of the pyrite, or mixture of the polyvinylidene difluoride (PVDF) and the N-methylpyrrolidone (NMP) is 1-4% of the weight of the pyrite. Purity of the pyrite ($F_eS_2$) is over 90%, and its particle size is less than $44\mu$m. Particle size of the graphite is 5.0-18.0$\mu$m on average, its BET specific surface area is 11.0-14.0$m^2$/g and ash content in the pyrite is less than 0.1 % of the weight of the pyrite.

The electrolyte solution is a mixture of organic solvent and inorganic lithium salt solvend. The organic solvent is a mixture of at least two components among N-methylpyrrolidone (NMP), 1,2- propylene carbonate (PC), dimethoxyethane (DME), 1,3-dioxolane (DOL), dimethylimidazolidinone (DMI), tetrahydrofuran (THF), dimethyl sulfoxide (DMSO) and sulfolane (SFL). The inorganic lithium salt solvend is any one of lithium perchlorate ($L_iC10_4$), lithium trifluoromethane sulfonate ($L_iCF_3SO_3$), lithium hexafluorophosphate ($L_iPF_6$), lithium bisoxalateborate ($L_iBOB$), lithium iodide ($L_iI$) or mixture of at least any two of them. Preferably, the inorganic lithium salt solvend is lithium perchlorate ($L_iC10_4$) or lithium iodide ($L_iI$) or a mixture of lithium perchlorate ($L_iC10_4$) and lithium bisoxalateborate ($L_iBOB$).

The separator is a polypropylene (PP) resin separator and/or polyethylene (PE) resin separator and/or polypropylene (PP)-polyethylene (PE) resin separator. The largest effective pore size of the separator is 0.08-0.12$\mu$m. Porosity of the separator is 40-50%. Impedance of the separator is 30-50m$\Omega$/mm$^2$.

The anode current collector is made of aluminum foil. The tabs are made of stainless-steel tape or nickel tape. The aluminum foil of the anode current collector is 10-25$\mu$m thick. The stainless-steel tape or nickel tape of the tabs is 0.05-0.1 mm thick.

The present invention also provides a method of preparing the non-aqueous electro-chemical battery. The method comprises the following steps:

preparing the anode: mixing pyrite, graphite, acetylene black and additive according to a predetermined proportion to obtain a mixture; mixing aqueous adhesive evenly with the mixture to obtain a coating material which is then coated onto the anode current collector; drying and laminating the anode current collector to a predetermined thickness; cutting the anode current collector to suitable size to obtain an anode plate; affixing an anode tab onto the anode plate by spot welding to obtain the anode;
drying the anode;
performing the following procedures in an environment where relative humidity is less than 1%: winding the anode with the cathode and the separator and fitting them into a steel case where electrolyte solution is then added in; grooving and sealing the steel case.

In the above method, when placing the anode and the cathode one over another along with the separator, a front end of the anode and a front end of the cathode are placed one over another in staggered positions preferably in a difference of 20-25mm.

Compared with the prior art, the anode coating of the present invention comprises the following components in the following weight ratio: pyrite: conductive carbon black: graphite: additive: adhesive in weight ratio of (80-90): (0.5-4): (1-4): (0-4): (1-4); the ratio of the capacity of the anode per unit area to the capacity of the cathode per unit area is less than 1.0; the ratio of the theoretical total capacity of the anode to the theoretical total capacity of the cathode is greater than 1.0. By adjusting the formula of the anode coating and the capacities of the anode and the cathode, and by the staggered positions according to which the anode and the cathode plates are placed respectively, the non-aqueous electro-chemical battery of the present invention and the preparation method thereof could greatly reduce shortcut rate during battery manufacturing process. Also, the present invention ensures a strong current power output of the battery and at the same time improves battery safety.

DETAILED DESCRIPTION OF THE INVENTION

The object of the present invention is to adjust the formula of the anode coating and also the capacities of the anode and the cathode so that the non-aqueous electro-chemical battery of the present invention could strike a balance between battery safety and strong current power output. In other words, the present invention could maintain strong current power output and at the same time improve battery safety. The present invention will be further described in detail below by reference to some embodiments. The embodiments are not intended to limit the present invention. Materials selected by the embodiments can be different in actual practice provided that the differences will not result in substantial influence to the effect of the present invention.

Embodiment 1

According to the present invention, the process of manufacturing a standard AA lithium-ferrous disulfide battery is described as follows:

Pyrite powder specifically used for manufacturing battery, graphite KS-15, acetylene black, and CMC and SBR both used as additive are the selected materials, wherein the pyrite powder contain mainly $F_eS_2$ as its main content (purity of the pyrite powder is thus over 96%); add the above materials into water according to a predetermined proportion; mix the above materials using a high-speed mixer so that the materials are sufficiently moisturized and well mixed; use a Brookfield viscometer for testing to obtain a muddy coating material of viscosity 5000-8000cP.

Use a transfer coating apparatus to coat the above coating material onto a surface of an aluminum foil substrate tape which is 0.018mm thick; adjust the transfer coating apparatus so that the coating material is intermittently coated onto the surface of the aluminum foil substrate tape wherein each coated surface is 280mm long and 10mm of the surface is left uncoated, and adjust the transfer coating apparatus at the same time to ensure that the per unit area density of the coating material on each coated surface of the aluminum foil substrate tape under a completely dried condition is 20.02mg/cm$^2$; coat both surfaces of the aluminum foil substrate tape with the coating material and then dry and laminate the aluminum foil substrate tape, wherein the laminated aluminum foil substrate tape is controlled to be around 0.18mm thick; cut the laminated aluminum foil substrate tape into a single piece of 275mm long and 39mm wide wherein 270mm of the length is coated with the coating material and the remaining 5mm is left uncoated; use an ultrasonic welding apparatus to weld a nickel tape of 55mm long, 2mm wide and 0.1 mm thick onto the remaining 5mm area which is left uncoated; and an anode plate is obtained.

Use a lithium foil tape as a cathode wherein the lithium foil is 0.15mm thick and 38mm wide and its purity is over 99.9%; bond a stainless-steel tape of 36mm long, 4mm wide and 0.2mm thick with an end of a lithium foil tape which is 270mm long; and a cathode plate is obtained.

Use a polyethylene resin film of 0.025mm thick of model number UPE3085 manufactured by UBE industries, Ltd. as a separator.

Use a winding apparatus to wind the anode plate, the cathode plate and the separator together so that they form a cylindrical battery core, wherein the separator is first coiled onto a winding needle and a small section of around 5mm of the separator is wound thereon, and the anode plate is then added in for winding, and after around 25mm of the anode plate is wound, the cathode plate is added in for winding; after the anode plate, the cathode plate and the separator are wound to form a cylindrical battery core, cut the separator and wrap the battery core and then use an adhesive tape for adhesion to obtain the battery core in one single piece.

Fold a cathode tab which extends from a first end of the obtained battery core by 90° toward an end surface of the battery core; use an insulating gasket before the battery core is put inside an outer case, wherein the outer case is a nickel-plated steel outer case with an outer diameter of 13.9mm; weld the cathode tab to bottom of the outer case by using a welding apparatus.

Ratio of capacity of the anode per unit area to capacity of the cathode per unit area is determined according to the following calculation:

$$\text{Capacity of the anode per unit area} = [(\text{amount of coating material on the anode: } 4.14g) \times (\text{dry weight percentage of } F_eS_2\text{: } 0.90) \times (\text{purity percentage of } F_eS_2\text{: } 0.96) \times (\text{energy density of } F_eS_2\text{: } 893.58\text{mAh/g})] / [(\text{length of coating material on the anode: } 270mm) \times (\text{width of coating material on the anode: } 39mm)] = 0.3034\text{mAh/mm}^2.$$

$$\text{Capacity of the cathode per unit area} = [(\text{cathode weight: } 0.82g) \times (\text{purity percentage of lithium: } 0.999) \times (\text{energy density of lithium: } 3861.7\text{mAh/g})] / [(\text{length of cathode: } 270mm) \times (\text{width of cathode: } 38mm)] = 0.3083\text{mAh/mm}^2.$$

$$\text{Ratio of the capacity of the anode per unit area to the capacity of the cathode per unit area} = \text{the capacity of the anode per unit area} / \text{the capacity of the cathode per unit area} = 0.3034 / 0.3083 = 0.9843.$$

Ratio of theoretical total capacity of the anode to theoretical total capacity of the cathode is determined according to the following calculation:

Theoretical total capacity of the anode = (amount of coating material on the anode: 4.14g) x (dry weight percentage of $F_eS_2$: 0.90) x (purity percentage of $F_eS_2$: 0.96) x (energy density of $F_eS_2$: 893.58mAh/g) = 3196.3mAh.

Theoretical total capacity of the cathode = (cathode weight: 0.82g) x (purity percentage of lithium: 0.999) x (energy density of lithium: 3861.7mAh/g) = 3163.4mAh.

The ratio of the theoretical total capacity of the anode to the theoretical total capacity of the cathode = the theoretical total capacity of the anode / the theoretical total capacity of the cathode = 3196.3/3163.4 = 1.0104.

Add 2.2g of electrolyte solution to each battery, wherein the electrolyte solution contains 1,3-dioxolane and ethylene glycol dimethyl ether in a volume ratio of 3:1 and also 1mol/L of lithium perchlorate; weld an anode tab which extends from a second end of the battery core with an anode cover; assemble and seal the battery by using ordinary skill of art to obtain a finished product of the battery; predischarge the battery.

Embodiment 2

An AA lithium-ferrous disulfide battery comparable to the one in embodiment 1 is manufactured using the same skill of art as in embodiment 1, except that the per unit area density of the coating material on each coated surface of the aluminum foil substrate tape under a completely dried condition is only around 24.23mg/cm$^2$.

Embodiment 3

An AA lithium-ferrous disulfide battery comparable to the one in embodiment 1 is manufactured using the same skill of art as in embodiment 1, except that the per unit area density of the coating material on each coated surface of the aluminum foil substrate tape under a completely dried condition is only around 16.66mg/cm$^2$.

Embodiment 4

An AA lithium-ferrous disulfide battery comparable to the one in embodiment 1 is manufactured using the same skill of art as in embodiment 1, except that the lithium foil tape being used to make the cathode plate is 275mm long and during the process of making the battery core, the cathode plate is wound to complete winding process after around 20mm of the anode plate is wound.

Embodiment 5

An AA lithium-ferrous disulfide battery comparable to the one in embodiment 1 is manufactured using the same skill of art as in embodiment 1, except that the lithium foil tape being used to make the cathode plate is 280mm long and during the process of making the battery core, the cathode plate is wound to complete winding process after around 15mm of the anode plate is wound.

Embodiment 6

An AA lithium-ferrous disulfide battery comparable to the one in embodiment 1 is manufactured using the same skill of art as in embodiment 1, except that the lithium foil tape being used to make the cathode plate is 285mm long and during the process of making the battery core, the cathode plate is wound to complete winding process after around 10mm of the anode plate is wound.

Embodiment 7

An AA lithium-ferrous disulfide battery comparable to the one in embodiment 1 is manufactured using the same skill of art as in embodiment 1, except that the lithium foil tape being used to make the cathode plate is 290mm long and during the process of making the battery core, the cathode plate is wound to complete winding process after around 5mm of the anode plate is wound.

The following table 1 compares different initial battery power outputs under different ratios of the capacity of the anode per unit area to the capacity of the cathode per unit area in different embodiments:

Table 1: Comparison between different battery power outputs (Unit: mHA; Model number: FR6)

| Embodiment | Ratio of capacity of anode per unit area to capacity of cathode per unit area | Continual power output at 1000mA up to 0.8V of its capacity | Continual power output at 200mA up to 1.0V of its capacity |
| --- | --- | --- | --- |
| 1 | 0.98 | 2492.6 | 2566.6 |
| 2 | 1.19 | 2537.8 | 2600.2 |
| 3 | 0.82 | 2036.6 | 2176.6 |

After continual power output of 80% of its power at 1000mA, the batteries according to different embodiments are left idle for 20 days at 60°C to simulate the condition of a battery after storage and partial release of power. During the idle period, changes in battery internal resistance of the batteries are measured and reflected in table 2 below:

Table 2: Changes in battery internal resistance (Unit: m$\Omega$; Model number: FR6)

| Embodiment | Ratio of capacity of anode per unit area to capacity of cathode per unit area | 60°C at the 5th day | 60°C at the 10th day | 60°C at the 15th day | 60°C at the 20th day |
| --- | --- | --- | --- | --- | --- |
| 1 | 0.98 | 518.5 | 638 | 672 | 688 |
| 2 | 1.19 | 856 | 1100 | 1413 | >2000 |
| 3 | 0.82 | 329 | 390 | 386 | 395 |
| Remark: Battery internal resistance values in table 2 are measured after the batteries are cooled down from 60°C and left idle in room temperature for 24 hours. | | | | | |

The ratio of the capacity of anode per unit area to the capacity of cathode per unit area as mentioned herein could be determined according to the following calculation:

Capacity of the anode per unit area = [(amount of coating material on the anode) x (dry weight percentage of $F_eS_2$) x (purity percentage of $F_eS_2$) x (energy density of $F_eS_2$: 893.58mAh/g)] / [(length of coating material on the anode) x (width of coating material on the anode].

Capacity of the cathode per unit area = [(cathode weight) x (purity percentage of lithium) x (energy density of lithium: 3861.7mAh/g)] / [(length of cathode) x (width of cathode)].

The ratio of the capacity of the anode per unit area to the capacity of the cathode per unit area = the capacity of the anode per unit area / the capacity of the cathode per unit area.

In order to prevent tabs of the battery from piercing through and damage the separator under extreme conditions (e.g. strong current power output and T6 test after partial release of power), causing the battery to catch fire or other accidents such as battery explosion, the anode and the cathode of the battery are arranged in staggered positions in a difference of over 5mm during winding process of the battery core. Prior to rolling separator (diaphragm) cover length, lithium belt placed position and orientation, position and orientation of the positive plate is arranged as shown in figure 1. The arrangement of staggered positions results in the ratio of theoretical capacity of the anode to the theoretical capacity of the cathode being greater than 1.0.

Under different measurements of the differences between the staggered positions in different embodiments, different battery shortcut rates during manufacturing process of the respective battery after winding process are measured and reflected in table 3 as follows:

Table 3: Comparison of different shortcut rates (Model number: FR6)

| Embodiment | Difference between staggered positions (mm) | Ratio of theoretical total capacity of anode to theoretical total capacity of cathode | Number of Wound batteries (unit of battery) | Number of Shortcut batteries (unit of battery) | Shortcut rate |
|---|---|---|---|---|---|
| 1 | 25 | 1.0104 | 4932 | 22 | 0.45% |
| 4 | 20 | 0.9932 | 4955 | 26 | 0.52% |
| 5 | 15 | 0.9751 | 4968 | 25 | 0.50% |
| 6 | 10 | 0.9587 | 5005 | 38 | 0.76% |
| 7 | 5 | 0.9423 | 4877 | 56 | 1.15% |

Remark: In table 3, a battery having an insulation resistance less than 60MΩ at 9V voltage is considered as a battery having a shortcut.

After power output of 50% of power at 200mA, the batteries according to different embodiments are subject to T6 test and the test details are reflected in table 4 as follows:

Table 4: T6 test details (Model number: FR6)

| Embodiment | Difference between staggered positions (mm) | Ratio of theoretical total capacity of anode to theoretical total capacity of cathode | Number of batteries tested | Test result | Conclusion (Pass/Fail) |
|---|---|---|---|---|---|
| 1 | 25 | 1.0104 | 32 | Normal | Pass |
| 4 | 20 | 0.9932 | 32 | Normal | Pass |
| 5 | 15 | 0.9751 | 32 | Normal | Pass |

(continued)

| Embodiment | Difference between staggered positions (mm) | Ratio of theoretical total capacity of anode to theoretical total capacity of cathode | Number of batteries tested | Test result | Conclusion (Pass/Fail) |
|---|---|---|---|---|---|
| 6 | 10 | 0.9587 | 32 | 1 battery catches fire | Fail |
| 7 | 5 | 0.9423 | 32 | 2 batteries catch fire and 4 batteries explode | Fail |

Under different ratios of the theoretical total capacity of the anode to the theoretical total capacity of the cathode, the batteries according to different embodiments are subject to UL1642 CRUSH test after they have completely released their power and the test details are reflected in table 5 as follows:

Table 5: CRUSH test details (Model number: FR6)

| Embodiment | Difference between staggered positions (mm) | Ratio of theoretical total capacity of anode to theoretical total capacity of cathode | Number of batteries tested | UL1642 CRUSH Test result | Conclusion (Pass/Fail) |
|---|---|---|---|---|---|
| 1 | 25 | 1.0104 | 32 | None has caught fire or explode | Pass |
| 4 | 20 | 0.9932 | 32 | None has caught fire or explode | Pass |
| 5 | 15 | 0.9751 | 32 | 20% catch fire | Fail |
| 6 | 10 | 0.9587 | 32 | 60% catch fire | Fail |
| 7 | 5 | 0.9423 | 32 | 60% catch fire | Fail |

The ratio of the theoretical total capacity of the anode to the theoretical total capacity of the cathode as mentioned herein could be determined according to the following calculation:

Theoretical total capacity of the anode = (amount of coating material on the anode) x (dry weight percentage of $F_eS_2$) x (purity percentage of $F_eS_2$) x (energy density of $F_eS_2$: 893.58mAh/g).

Theoretical total capacity of the cathode = (cathode weight) x (purity percentage of lithium) x (energy density of lithium: 3861.7mAh/g).

The ratio of the theoretical total capacity of the anode to the theoretical total capacity of the cathode = the theoretical total capacity of the anode / the theoretical total capacity of the cathode.

According to the above embodiments, the ratio of the capacity of the anode per unit area to the capacity of the cathode per unit area is less than 1.0; the ratio of the theoretical total capacity of the anode to the theoretical total capacity of the cathode is greater than 1.0. By adjusting the formula of the anode coating and the capacities of the anode and the cathode, and by the staggered positions preferably in a difference of 20-25mm according to which the anode and the cathode plates are placed respectively, the present invention could reduce shortcut rate during battery manufacturing process. The present invention ensures a strong current power output of the battery and at the same time improves battery safety.

**Claims**

1.  A non-aqueous electro-chemical battery comprising an anode current collector, a cathode, electrolyte solution and a separator, wherein the anode current collector contains anode coating and the anode current collector as a whole acts as an anode; both the anode current collector and the cathode are provided with tabs; the cathode is made of lithium metal or lithium-aluminum alloy; the non-aqueous electro-chemical battery is **characterized in that**, the anode coating comprises the following components in the following weight ratio: pyrite: conductive carbon black: graphite: additive: adhesive in weight ratio of (80-90): (0.5-4): (1-4): (0-4): (1-4);
    ratio of capacity of the anode per unit area to capacity of the cathode per unit area is less than 1.0;
    ratio of theoretical total capacity of the anode to theoretical total capacity of the cathode is greater than 1.0.

2.  The non-aqueous electro-chemical battery as in Claim 1, wherein the additive is any one of $MnO_2$, $TiO_2$, $LiCoO_2$, $LiMnO_2$, $LiNiO_2$, $Li_2TiO_3$, $Li_4Ti_5O_{12}$ or mixture of several of them.

3.  The non-aqueous electro-chemical battery as in Claim 2, wherein the adhesive is any one of polyvinyl alcohol (PVA), polyvinylidene difluoride (PVDF), polytetrafluoroethylene (PTFE), carboxymethylcellulose sodium (CMC), styrene-butadiene rubber latex (SBR), N-methylpyrrolidone (NMP) or mixture of any two of them.

4.  The non-aqueous electro-chemical battery as in Claim 3, wherein mixture of the carboxymethylcellulose sodium (CMC) and the styrene-butadiene rubber latex (SBR) is 1-4% of the weight of the pyrite, or mixture of the polyvinylidene difluoride (PVDF) and the N-methylpyrrolidone (NMP) is 1-4% of the weight of the pyrite.

5.  The non-aqueous electro-chemical battery as in Claim 4, wherein purity of the pyrite ($F_eS_2$) is over 90%, and the particle size is less than $44\mu m$; the particle size of the graphite is $5.0\text{-}18.0\mu m$ on average, the BET specific surface area is $11.0\text{-}14.0m^2/g$ and ash content in the pyrite is less than 0.1 % of the weight of the pyrite.

6.  The non-aqueous electro-chemical battery as in Claim 1, wherein the electrolyte solution is a mixture of organic solvent and inorganic lithium salt solvend; the organic solvent is a mixture of at least two components among N-methylpyrrolidone (NMP), 1,2- propylene carbonate (PC), dimethoxyethane (DME), 1,3-dioxolane (DOL), dimethylimidazolidinone (DMI), tetrahydrofuran (THF), dimethyl sulfoxide (DMSO) and sulfolane (SFL); the inorganic lithium salt solvend is any one of lithium perchlorate ($L_iC10_4$), lithium trifluoromethane sulfonate ($L_iCF_3SO_3$), lithium hexafluorophosphate ($L_iPF_6$), lithium bisoxalateborate ($L_iBOB$), lithium iodide ($L_iI$) or mixture of at least any two of them.

7.  The non-aqueous electro-chemical battery as in Claim 1, wherein the separator is a polypropylene (PP) resin separator and/or polyethylene (PE) resin separator and/or polypropylene (PP)-polyethylene (PE) resin separator.

8.  The non-aqueous electro-chemical battery as in Claim 7, wherein the largest effective pore size of the separator is $0.08\text{-}0.12\mu m$; porosity of the separator is 40-50%; impedance of the separator is $30\text{-}50m\Omega/mm^2$.

9.  The non-aqueous electro-chemical battery as in Claim 1, wherein the anode current collector is made of aluminum foil; the tabs are made of stainless-steel tape or nickel tape; the aluminum foil of the anode current collector is

10-25$\mu$m thick; the stainless-steel tape or nickel tape of the tabs is 0.05-0.1 mm thick.

10. A method of preparing the non-aqueous electro-chemical battery according to any one of Claims 1-8 comprises the following steps:

preparing the anode: mixing pyrite, graphite, acetylene black and additive according to a predetermined proportion to obtain a mixture; mixing adhesive evenly with the mixture to obtain a coating material which is then coated onto the anode current collector; drying and laminating the anode current collector and then cutting the anode current collector to obtain an anode plate; affixing an anode tab onto the anode plate by spot welding to obtain the anode; drying the anode;
performing the following procedures in an environment where relative humidity is less than 1%: winding the anode with the cathode and the separator and fitting them into a steel case where electrolyte solution is then added in; grooving and sealing the steel case;
in the above method, when placing the anode and the cathode one over another along with the separator, a front end of the anode and a front end of the cathode are placed one over another in staggered positions preferably in a difference of 20-25mm.

# INTERNATIONAL SEARCH REPORT

International application No.

**PCT/CN2011/079487**

## A. CLASSIFICATION OF SUBJECT MATTER

See the extra sheet

According to International Patent Classification (IPC) or to both national classification and IPC

## B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

WPI; EPODOC; CNKI; CPRS: iron disulfide, pyrite, lithium, capacity

## C. DOCUMENTS CONSIDERED TO BE RELEVANT

| Category* | Citation of document, with indication, where appropriate, of the relevant passages | Relevant to claim No. |
|---|---|---|
| A | CN 1659729 A (EVEREADY BATTERY COMPANY, INC.), 24 August 2005 (24.08.2005), the whole document | 1-10 |
| A | CN 101517788 A (EVEREADY BATTERY COMPANY, INC.), 26 August 2009 (26.08.2009), the whole document | 1-10 |
| A | CN 1645650 A (DESAY POWER TECHNOLOGY CO., LTD.), 27 July 2005 (27.07.2005), the whole document | 1-10 |
| A | WO 2011/047117 A1 (EVEREADY BATTERY COMPANY, INC.), 21 April 2011 (21.04.2011), the whole document | 1-10 |
| A | US 4450214 A (UNION CARBIDE CORP.), 22 May 1984 (22.05.1984), the whole document | 1-10 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 09 May 2012 (09.05.2012) | **07 June 2012 (07.06.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Hua** Telephone No.: (86-10) **62411623** |
|---|---|

Form PCT/ISA/210 (second sheet) (July 2009)

## INTERNATIONAL SEARCH REPORT
### Information on patent family members

| | International application No. |
|---|---|
| | **PCT/CN2011/079487** |

| Patent Documents referred in the Report | Publication Date | Patent Family | Publication Date |
|---|---|---|---|
| CN 1659729 A | 24.08.2005 | US 2003228518 A1 | 11.12.2003 |
| | | WO 03105255 A2 | 18.12.2003 |
| | | AU 2003274381 A1 | 22.12.2003 |
| | | US 6849360 B2 | 01.02.2005 |
| | | EP 1518287 A2 | 30.03.2005 |
| | | KR 20050004280 A | 12.01.2005 |
| | | JP 2005529467 A | 29.09.2005 |
| | | AU 2003274381 A8 | 03.11.2005 |
| | | EP 1518287 B1 | 21.05.2008 |
| | | DE 60321176 E | 03.07.2008 |
| | | EP 1953855 A2 | 06.08.2008 |
| | | ES 2302942 T3 | 01.08.2008 |
| | | EP 2242135 A2 | 20.10.2010 |
| | | USRE 41886 E | 26.10.2010 |
| | | KR 100016255 B1 | 25.02.2011 |
| CN 101517788 A | 26.08.2009 | WO 2008013853 A2 | 31.01.2008 |
| | | US 2008026288 A1 | 31.01.2008 |
| | | US 2008026293 A1 | 31.01.2008 |
| | | WO 2008013853 A3 | 13.03.2008 |
| | | KR 20090035704 A | 10.04.2009 |
| | | EP 2070138 A2 | 17.06.2009 |
| | | AU 2007277179 A1 | 31.01.2008 |
| | | CA 2658749 A1 | 31.01.2008 |
| | | JP 2009545122 A | 17.12.2009 |
| | | EP 2365563 A1 | 14.09.2011 |
| | | SG 173998 A1 | 29.09.2011 |
| CN 1645650 A | 27.07.2005 | None | |
| WO 2011/047117 A1 | 21.04.2011 | US 2011086254 A1 | 14.04.2011 |
| | | WO 2011047117 A9 | 07.07.2011 |
| US 4450214 A | 22.05.1984 | AU 1576683 A | 22.12.1983 |
| | | JP 59005570 A | 12.01.1984 |
| | | BR 8303081 A | 31.01.1984 |
| | | DK 8302702 A | 06.02.1984 |
| | | EP 0102692 A | 14.03.1984 |
| | | ZA 8304327 A | 24.01.1984 |
| | | CA 1195725 A | 22.10.1985 |

Form PCT/ISA/210 (patent family annex) (July 2009)

## INTERNATIONAL SEARCH REPORT

International application No.

**PCT/CN2011/079487**

**CLASSIFICATION OF SUBJECT MATTER:**

H01M 4/58 (2010.01) i

H01M 4/06 (2006.01) i

H01M 6/16 (2006.01) i

Form PCT/ISA/210 (extra sheet) (July 2009)

13

**EP 2 752 924 A1**

**REFERENCES CITED IN THE DESCRIPTION**

**Patent documents cited in the description**

- CN 1659729